# EUROPÄISCHE PATENTSCHRIFT

(11) **EP 3 648 312 B1**
(45) Veröffentlichungstag und Bekanntmachung des Hinweises auf die Patenterteilung: **14.12.2022**
(21) Anmeldenummer: 18203020.5
(22) Anmeldetag: 29.10.2018
(51) Int. Cl.: H02K 3/32, H02K 3/34, H02K 15/10, H02K 15/12, H01F 5/06, H01F 41/12, H01F 27/32

(54) **VORGEFERTIGTE SPULE FÜR EINEN DIREKTANTRIEB**
PREFABRICATED COIL FOR A DIRECT DRIVE
BOBINE PRÉFABRIQUÉE POUR UN ENTRAÎNEMENT DIRECT

(43) Veröffentlichungstag der Anmeldung: 06.05.2020
(73) Patentinhaber: ETEL S.A., 2112 Môtiers (CH)
(72) Erfinder: POURCHET, Johann, 25650 La Chaux (FR); ANSTETT, Jérémy, 25300 Pontarlier (FR)
(74) Vertreter: Pleyer, Hans Anno

(56) Entgegenhaltungen:
- DE-B- 1 046 755
- JP-A- S6 098 845
- JP-A- 2017 046 515
- US-A- 3 297 970
- US-A- 3 378 800

## Beschreibung

### GEBIET DER TECHNIK

Die vorliegende Erfindung betrifft Direktantriebe mit vorgefertigten Spulen. Solche Spulen werden beispielsweise auf die Zähne eines Stators eines Direktantriebs gesteckt. Aufgrund der hohen Betriebsspannung solcher Antriebe ist eine gute Isolierung der Spulen gegen den Stator und zwischen den Phasen des Antriebs besonders wichtig.

### STAND DER TECHNIK

Aus der EP 0793870 B2 sind lineare und rotatorische Direktantriebe bekannt, bei denen ein Stator Zähne mit geraden Flanken aufweist, auf die vorgefertigte Spulen gesteckt werden können. Dabei wird entweder auf jeden Zahn oder auf jeden zweiten Zahn eine Spule gesteckt, so dass in beiden Fällen die Lücken zwischen den Zähnen möglichst gut mit Spulenwindungen ausgefüllt sind. Man spricht in diesem Zusammenhang von einem möglichst guten Füllfaktor. Aufgrund der hohen Betriebsspannung von einigen hundert Volt ist es notwendig, für eine gute Isolierung der Spulen zu sorgen.

Aus der DE 102012206039 A1 sind vorgefertigte Spulen bekannt, deren gerade Abschnitte zwischen den Wicklungsköpfen der Spulen mit einem Isolierpapier umwickelt sind. Dabei überlappen auf einer dem Inneren der Spule bzw. dem Zahn abgewandten äußeren Fläche der Spule zwei Lagen dieses Isolierpapiers. Die Windungen in den Lagen dieser Spulen liegen dabei ohne Versatz übereinander, was zu einem nicht optimalen Füllfaktor (also Anteil an Kupfer zwischen den Zähnen) führt. Allerdings vermeidet diese Wicklungsart gewisse Probleme bei der nachträglichen Kompression der Spule zusammen mit dem Isolierpapier, wie weiter unten noch näher erklärt wird.

Aus der DE 1789162 ist es bekannt, Spulen orthozyklisch zu wickeln, um den Füllfaktor zu erhöhen. Die Drähte einer Lage liegen dabei zwischen den Drähten der darunter liegenden Lage, so dass die Mittelpunkte dreier sich berührender Drähte ein gleichseitiges Dreieck bilden. Zusätzlich wird vorgeschlagen, die Spule durch Druck und Temperatur zu komprimieren und dabei die Drähte zu einem sechseckigen Querschnitt zu deformieren. Eine Isolationsschicht, die den Draht der Spulenwicklung umgibt, schmilzt dabei auf und sorgt dadurch für ein Verbacken der Spule, ohne dass dabei Kurzschlüsse zwischen den einzelnen Windungen entstehen würden. Eine solche Spule ist aber nicht optimal gegen die Umgebung isoliert.

Die Dokumente JP2017046515A, US3297970A, JPS6098845A, DE1046755B und US3378800A zeigen weitere Aspekte solcher vorgefertigter Spulen für den Einsatz in Direktantrieben.

### ZUSAMMENFASSUNG DER ERFINDUNG

Es ist Aufgabe der Erfindung, einen Direktantrieb mit vorgefertigten Spulen zu schaffen, die einen hohen Füllfaktor aufweisen und die zuverlässig isoliert sind.

Diese Aufgabe wird gelöst durch eine Vorrichtung gemäß Anspruch 1.

Auf diese Weise ist eine vorgefertigte Spule geschaffen, die dank der orthozyklischen Wicklung und der zusätzlichen Komprimierung unter Druck und Temperatur einen hohen Füllfaktor und eine gute Stabilität aufweist, und die dank der Ummantelung der geraden Abschnitte der Spule mit einem flächigen Isolator besonders gut isoliert ist.

Durch eine geeignete Ausgestaltung des Nahtbereiches des flächigen Isolators kann außerdem eine Beschädigung des Isolators durch einen als Folge der orthozyklischen Wicklung im Inneren der Spule konzentrierten Druck beim Verbacken der Spule vermieden werden. Hierfür muss die Überlappung entweder klein genug (gemäß der Erfindung ohne Überlappung) oder - in einer zur Erfindung nicht gehörenden Ausführung - groß genug sein (bis hin zu einer Lösung mit vollständiger Überlappung auf der äußeren Fläche).

Die erfindungsgemäße Lösung ergibt sich für den Fall, dass nicht jeder zweite Zahn mit einer Spule umwickelt ist, sondern jeder einzelne Zahn eine Spule trägt. Dann kann ohne Überlappung gearbeitet werden, wenn man darauf achtet, dass die Stoßstellen des flächigen Isolators benachbarter Spulen versetzt zueinander angeordnet sind.

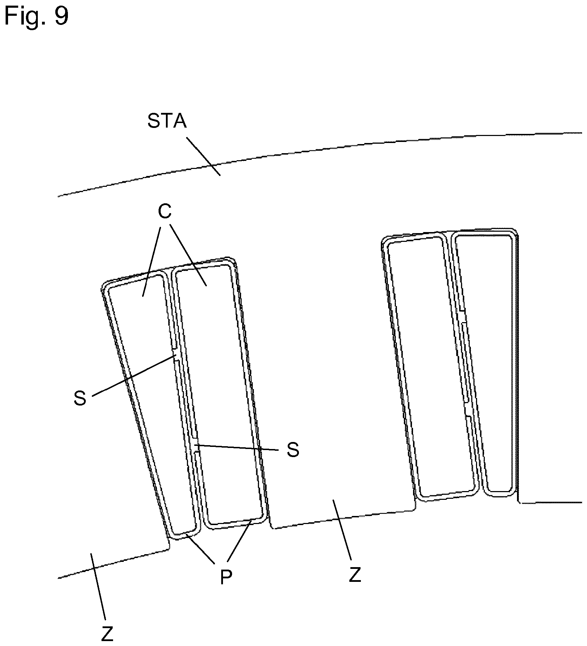

Weitere Vorteile und Einzelheiten ergeben sich aus der nachfolgenden Beschreibung verschiedener Ausführungsformen anhand der Figuren, wobei lediglich die letzte Ausführungsform der Figur 9 die erfindungsgemäße Ausführungsform zeigt. Die übrigen Ausführungsformen dienen dem besseren Verständnis der Erfindung.

### KURZE BESCHREIBUNG DER ZEICHNUNGEN

Dabei zeigt
- Figur 1: eine vorgefertigte Spule nach einer ersten Ausführungsform,
- Figur 2: einen Schnitt durch eine vorgefertigte Spule gemäß der ersten Ausführungsform,
- Figur 3: eine vorgefertigte Spule gemäß einer zweiten Ausführungsform,
- Figur 4: einen Schnitt durch eine vorgefertigte Spule gemäß der zweiten Ausführungsform,
- Figur 5: einen vorgefertigte Spule gemäß einer dritten Ausführungsform,
- Figur 6: einen Schnitt durch eine vorgefertigte Spule gemäß der dritten Ausführungsform,
- Figur 7: einen vorgefertigte Spule gemäß einer vierten Ausführungsform,
- Figur 8: einen vorgefertigte Spule gemäß einer fünften Ausführungsform,
- Figur 9: einen Stator, bei dem jeder Zahn mit einer vorgefertigten Spule gemäß der fünften und einzigen erfindungsgemäßen Ausführungsform bestückt ist.

### BESCHREIBUNG DER AUSFÜHRUNGSFORMEN

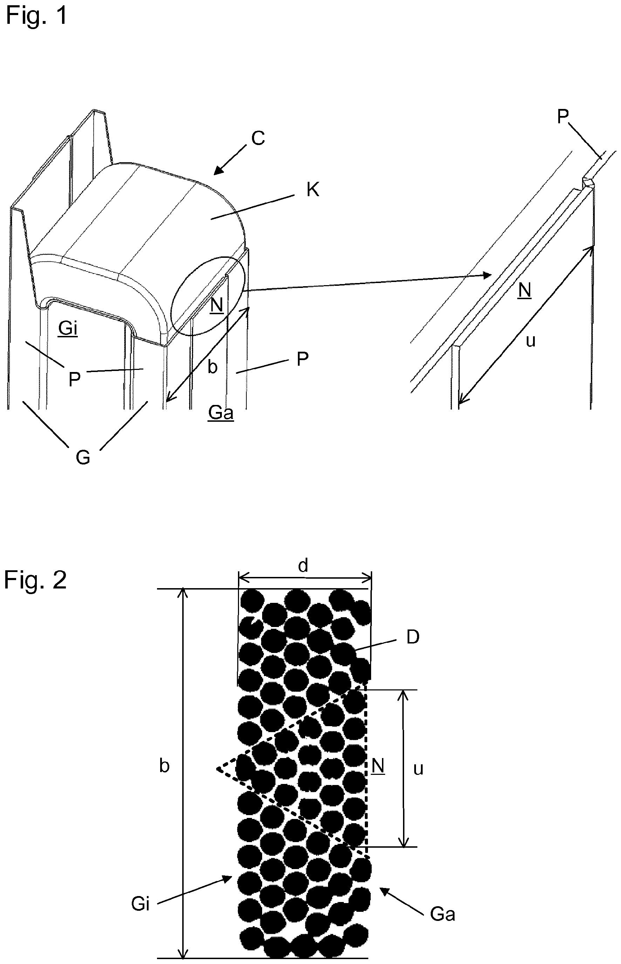

Die Figur 1 zeigt eine vorgefertigte Spule C gemäß einer ersten Ausführungsform. Zwei gerade Abschnitte G der Spule C sind über zwei Wicklungsköpfe K miteinander verbunden. Die Figur 1 zeigt nur die obere Hälfte der Spule C, es ist daher nur ein Wicklungskopf K zu sehen. Solche vorgefertigten Spulen C sind dazu gedacht, in Nuten zwischen Zähnen eines Stators eingelegt zu werden, so dass jede Nut mit möglichst viel Kupfer belegt ist. Dies kann erreicht werden, indem jeder zweite Zahn eines Stators mit einer Spule C bestückt wird, so dass jeweils ein gerader Abschnitt G die Lücken zu den benachbarten Zähnen vollständig ausfüllt. Alternativ kann jeder Zahn mit einer Spule C bestückt werden, so dass jeder gerade Abschnitt G die Hälfte einer Lücke zwischen den Zähnen ausfüllt. Die Wicklungsköpfe K ragen dabei seitlich aus dem Blechpaket des Stators heraus. Die Spule C ist orthozyklisch gewickelt.

Die geraden Abschnitte G sind mit einem flächigen Isolator P ummantelt, um die Spule C gegen den Stator, gegen die Umgebung oder auch gegen benachbarte Spulen C zusätzlich zur Isolation der einzelnen Windungen zu isolieren. So ein flächiger Isolator P wird auch als Isolierpapier oder Isolierfolie bezeichnet. Es kann sich dabei um eine ca. 200µm dicke, biaxial orientierte Polyester-Folie handeln, wie sie beispielsweise von der Firma DuPont unter dem Markennamen Mylar angeboten wird. Diese Folie kann zusätzlich auf einer oder auf beiden Seiten durch eine dünne Schicht (ca. 50µm) Aramidfasern verstärkt sein, wie beispielsweise unter dem Markennamen Nomex der Firma DuPont erhältlich.

Da der flächige Isolator P um jeweils einen geraden Abschnitt G herumgewickelt wird, weist er einen Nahtbereich N auf, der auf einer äußeren, dem Inneren der Spule C und damit dem Zahn abgewandten äußeren Fläche Ga liegt. Wie besonders in der Ausschnittsvergrößerung der Figur 1 gut zu erkennen ist, besteht dieser Nahtbereich N aus einem Bereich, in dem sich zwei Lagen des flächigen Isolators P überlappen. Dieser Überlappungsbereich hat eine gewisse Ausdehnung u entlang der Breite b der Spule, die durch die axiale Länge der Nuten und Zähne des Stators gegeben ist.

Zur Herstellung solcher vorgefertigter Spulen C wird die Spule C nach dem Ummanteln der geraden Abschnitte G mit dem flächigen Isolator P unter Anwendung von Druck und Temperatur komprimiert und verbacken, um die Stabilität der Spule C und den Füllfaktor zu erhöhen. Dabei schmilzt die Isolation der Drähte der Spule C auf, die Windungen und der flächige Isolator P gehen eine innige Verbindung ein. Der Draht D, aus dem eine Spule C gewickelt wird, besteht üblicherweise aus Kupfer und ist mit einer zweilagigen Isolationsschicht umgeben. Auf dem Kupfer befindet sich eine dünne Keramikschicht, die wiederum von einer polymerisierenden Deckschicht umgeben ist, welche die einzelnen Windungen untereinander verklebt und so der Spule C mechanische Festigkeit verleiht.

Die Figur 2, die eine erste Ausführungsform darstellt, zeigt einen Schnitt durch einen geraden Abschnitt G der Spule C, nachdem sie Druck und Temperatur ausgesetzt wurde. Durch die lokal erhöhte Dicke des flächigen Isolators P im Nahtbereich N wird auf die unmittelbar unter dem Nahtbereich N liegenden Drähte D ein etwas erhöhter Druck ausgeübt. Hiervon sind in der Figur 2 etwa sechs Drähte D oder Windungen der äußersten Lage der Spule C betroffen. Wegen der zur Erhöhung des Füllfaktors orthozyklischen Wicklung der Spule C, die in der Figur 2 gut zu erkennen ist, wird dieser zusätzliche Druck nur auf die Drähte D weiter gegeben, die zwischen den Drähten D der äußersten Lage angeordnet sind. Der Druck wird also auf nur noch fünf Drähte D der nächsten Lage verteilt und steigt damit an. Dies setzt sich fort, bis schließlich auf einer inneren Fläche Gi der Spule C der zusätzliche Druck auf nur noch einem einzigen Draht D lastet. Im Schnitt erkennt man, dass dieser Draht D besonders deutlich deformiert ist. An dieser Stelle wird der zusätzliche Druck auf den dort liegenden flächigen Isolator P übertragen. Der flächige Isolator P ist in der Figur 2 nicht dargestellt.

Die in der Figur 2 eingezeichneten gestrichelten Linien verdeutlichen den Bereich, in dem wegen der orthozyklischen Wicklung ein auf der äußeren Fläche Ga eingebrachter Druck sich immer mehr konzentriert. Es entsteht ein gleichseitiges Dreieck, dessen Basis unter dem Nahtbereich N mit der Überlappung des flächigen Isolators P liegt, und dessen gegenüberliegende Spitze auf den gegenüberliegenden flächigen Isolator P trifft. Die Höhe dieses Dreiecks entspricht hier gerade der Dicke d der Spule C. Gemäß diesem ersten Ausführungsbeispiel muss also der flächige Isolator P so stabil ausgewählt werden, dass er auch lokal stark erhöhte Drücke aushalten kann.

Die weiteren Ausführungsbeispiele sollen den besonders hohen Druck auf den flächigen Isolator P gegenüber des Nahtbereichs N reduzieren oder ganz vermeiden und damit einer Beschädigung der Isolierung und einem möglichen Ausfall eines Direktantriebs vorbeugen, beziehungsweise die Auswahl einer geringeren Stärke des flächigen Isolators P (im Vergleich mit dem ersten Ausführungsbeispiel) ermöglichen.

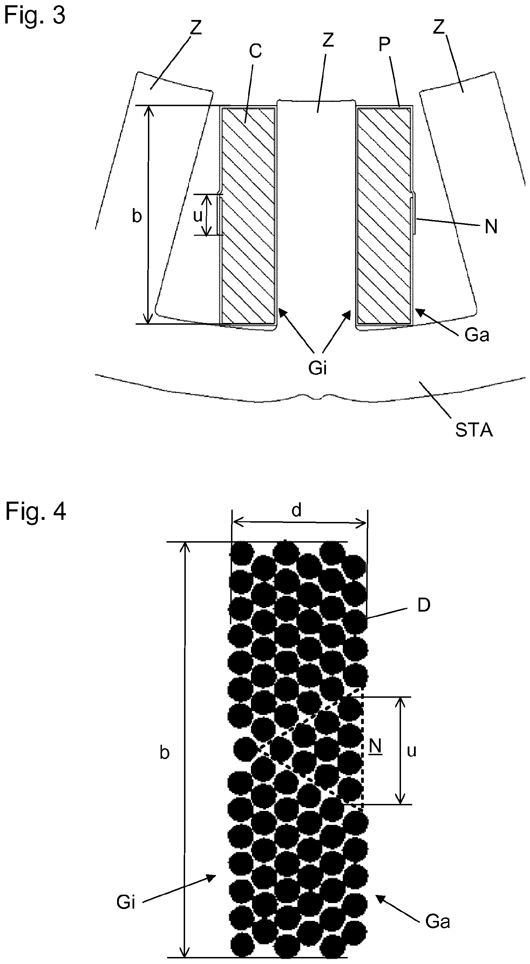

Die Figur 3 zeigt ein zweites Ausführungsbeispiel. Hier ist eine vorgefertigte Spule C bereits auf einen Zahn Z eines Stators STA gesteckt. Die Zähne Z des Stators STA weisen dafür gerade Flanken auf. Die Höhe dieser Zahnflanken entspricht in etwa der Breite b der Spulen C.

Gemäß der in der Figur 3 dargestellten zweiten Ausführungsform wird der Nahtbereich N nun so ausgebildet, dass die Ausdehnung u des Überlappungsbereichs kleiner ist als das 1,16 - fache der Dicke d der Spule C. Der Faktor 1,16 entspricht dabei etwa dem zweifachen des Kehrwerts der Quadratwurzel von 3. Dieser Faktor ergibt sich aus dem oben beschriebenen gleichseitigen Dreieck.

Wie man in der Figur 4 erkennt, liegt die Spitze dieses Dreiecks nun innerhalb der Spule C. Der hohe Druck aus dem Nahtbereich N erreicht also den gegenüberliegenden flächigen Isolator nicht, wenn man die Ausdehnung u der Überlappung klein genug wählt. Der Extremfall "keine Überlappung" wird als separates Ausführungsbeispiel weiter unten beschrieben.

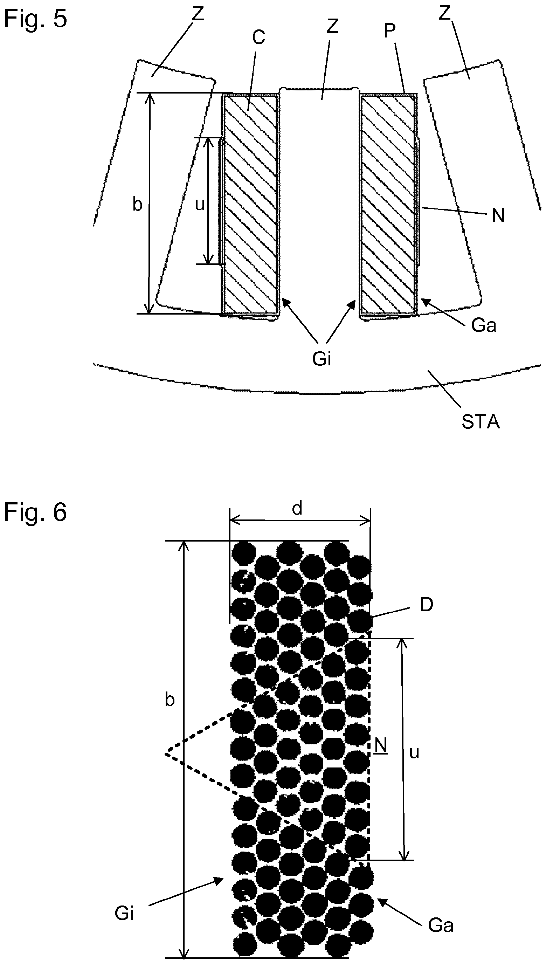

Die Figur 5 zeigt ein drittes Ausführungsbeispiel. Hier ist wieder eine vorgefertigte Spule C auf einen Zahn Z eines Stators STA gesteckt. Die Zähne Z des Stators STA weisen dafür gerade Flanken auf. Die Höhe dieser Zahnflanken entspricht in etwa der Breite b der Spulen C.

Gemäß der in der Figur 5 dargestellten dritten Ausführungsform wird der Nahtbereich N nun so ausgebildet, dass die Ausdehnung u des Überlappungsbereichs größer ist als das 1,16 - fache der Dicke d der Spule C, vermehrt um den dreifachen Durchmesser eines Drahtes D. Typische Drahtdurchmesser sind 0.5mm - 1.5mm. Eine Lage der Spule C kann dabei etwa 10 - 30 Drähte D nebeneinander aufweisen, wobei ca. 4 - 10 Lagen übereinander liegen können.

Wie man in der Figur 6 erkennt, liegt die Spitze des gestrichelt eingezeichneten Dreiecks nun außerhalb der Spule C. Der hohe Druck aus dem Nahtbereich N erreicht zwar den gegenüberliegenden flächigen Isolator P, wenn man die Ausdehnung u der Überlappung groß genug wählt. Der Druck ist so aber noch auf mehrere (im Beispiel drei) Drähte D verteilt, eine Beschädigung des flächigen Isolators P kann vermieden werden. Der Extremfall "vollständige Überlappung" wird als separates Ausführungsbeispiel im Folgenden beschrieben.

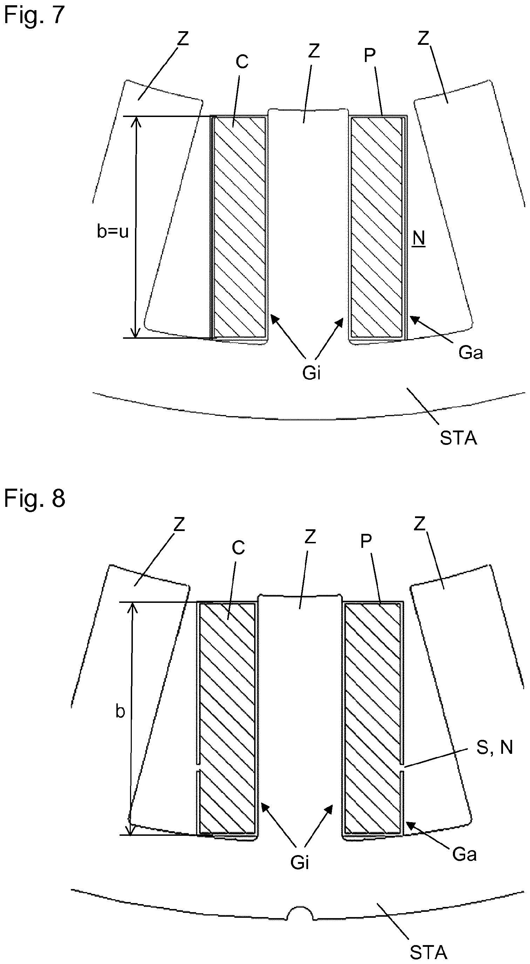

Die Figur 7 zeigt als vierte Ausführungsform den Extremfall der vollständigen Überlappung. Hier entspricht die Ausdehnung u der Überlappung bzw. des Nahtbereichs N der Breite b der Spule C. Die Überlappung und damit der Nahtbereich N erstreckt sich über die gesamte äußere Fläche Ga. Beim Komprimieren dieser Spule wird die Entstehung eines lokal erhöhten Drucks, der sich ins Innere der Spule fortpflanzen und konzentrieren könnte, vollständig vermieden.

Die Figur 8 zeigt als fünfte Ausführungsform den Extremfall ohne Überlappung im Nahtbereich N. Vielmehr ist eine Stoßstelle S ausgebildet, an der die beiden Enden oder Kanten des flächigen Isolators P aufeinandertreffen, ohne sich zu überlappen. Da die Entstehung eines kleinen Spalts in der Isolierung an dieser Stelle unvermeidbar ist, muss auf andere Weise für eine gute Isolierung gesorgt werden. So sollte die Stoßstelle S bevorzugt eher in der Nähe des Bodens der Nut zwischen benachbarten Zähnen Z liegen, da hier der Abstand zum benachbarten Zahn Z größer ist - jedenfalls in einem rotatorischen Direktantrieb. Allgemein muss die Lage der Stoßstelle so gewählt werden, dass der Abstand zu leitenden Bereichen des Stators STA maximiert wird. Außerdem kann die Spule C im Stator STA mit einer Vergussmasse umhüllt werden, die die Isolation verbessert. Zusätzlich kann nach dem Komprimieren der Spule ein Streifen des flächigen Isolators P über die Stoßstelle S geklebt werden, ohne dabei weiter Druck auf die Spule C auszuüben. Auch beim Komprimieren dieser Spule C wird die Entstehung eines lokal erhöhten Drucks, der sich ins Innere der Spule C fortpflanzen und konzentrieren könnte, vollständig vermieden.

Figur 9 zeigt eine alternative und sechste Ausführungsform, die Gegenstand der Erfindung ist. So kann in einem Direktantrieb auch jeder Zahn Z (statt nur jeder zweite Zahn Z) des Stators STA mit einer Spule C gemäß der fünften Ausführungsform umwickelt werden. Dann teilen sich je zwei gerade Abschnitte G einen Zwischenraum zwischen zwei Zähnen Z. Die Stoßstellen S zweier aneinandergrenzenden Spulen C müssen dann mit ausreichendem Abstand versetzt zueinander angeordnet werden, so dass jede Stoßstelle S durch den flächigen Isolator P der benachbarten Spule C zusätzlich isoliert wird. So könnten die Stoßstellen S zueinander und zum Boden der Nut bzw. zu deren Öffnung einen Abstand von etwa einem Drittel der Breite b der Spule C einhalten. Ein Abstand von drei Millimetern kann dabei als Untergrenze angenommen werden, um eine sichere Isolierung zu erreichen.

## Patentansprüche

1. Direktantrieb mit einem mit Zähnen (Z) versehenen Stator (STA), wobei jeder Zahn (Z) gerade Flanken aufweist und mit einer vorgefertigten Spule (C) bestückt ist, wobei jede Spule (C) aus einem Draht (D) mit rundem Querschnitt orthozyklisch gewickelt ist und zwei gerade Abschnitte (G) sowie zwei Wicklungsköpfe (K) aufweist, die die geraden Abschnitte (G) miteinander verbinden, wobei der Abstand der Wicklungsköpfe (K) voneinander eine Höhe der geraden Abschnitte (G) definiert, wobei die geraden Abschnitte (G) eine in das Innere der Spule (C) weisende, dem jeweiligen Zahn (Z) zugewandte innere Fläche (Gi) und eine der inneren Fläche (Gi) gegenüberliegende, dem jeweiligen Zahn (Z) abgewandte äußere Fläche (Ga) der Höhe der geraden Abschnitte (G) und einer Breite (b) der geraden Abschnitte (G) aufweisen, wobei der Abstand der inneren Fläche (Gi) von der äußeren Fläche (Ga) eine Dicke (d) der Spule (C) definiert, wobei die geraden Abschnitte (G) jeweils von einem flächigen Isolator (P) ummantelt sind, und wobei der Draht (D) und der flächige Isolator (P) unter Anwendung von Druck und Temperatur zu einer freitragenden Spule (C) verbacken sind, und wobei der flächige Isolator (P) auf der äußeren Fläche (Ga) einen Nahtbereich (N) aufweist, wobei bei jeder zweiten Spule (C) die innere Fläche (Gi) und die äußere Fläche (Ga) parallel zueinander und parallel zu den Flanken des jeweiligen Zahns (Z) ausgerichtet sind, wobei eine Ausdehnung (u) des Nahtbereichs (N) in Richtung der Breite (b) Null ist, so dass eine Stoßstelle (S) durch Kanten des flächigen Isolators (P) gebildet ist, und die Stoßstellen (S) zweier gemeinsam zwischen zwei Zähnen (Z) liegenden, sich einen Zwischenraum zwischen den Zähnen (Z) teilenden geraden Abschnitten (G) zweier aneinander grenzender Spulen (C) in Richtung der Breite (b) versetzt zueinander angeordnet sind.

## Claims

1. Direct drive having a stator (STA) provided with teeth (Z), wherein each tooth (Z) has straight flanks and is fitted with a prefabricated coil (C), wherein each coil (C) is orthocyclically wound from a wire (D) with a round cross section and has two straight portions (G) and two winding heads (K) which connect the straight portions (G) to one another, wherein the distance between the winding heads (K) defines a height of the straight portions (G), wherein the straight portions (G) have an inner surface (Gi) pointing into the interior of the coil (C) and facing the respective tooth (Z) and an outer surface (Ga), situated opposite the inner surface (Gi) and facing away from the respective tooth (Z), of the height of the straight portions (G) and a width (b) of the straight portions (G), wherein the distance between the inner surface (Gi) and the outer surface (Ga) defines a thickness (d) of the coil (C), wherein the straight portions (G) are each sheathed by a sheet-like insulator (P), and wherein the wire (D) and the sheet-like insulator (P) are baked to form a self-supporting coil (C) with the application of pressure and temperature, and wherein the sheet-like insulator (P) has, on the outer surface (Ga), a seam region (N), wherein, in each second coil (C), the inner surface (Gi) and the outer surface (Ga) are oriented parallel to one another and parallel to the flanks of the respective tooth (Z), wherein an extent (u) of the seam region (N) in the direction of the width (b) is zero, so that an abutment point (S) is formed by edges of the sheet-like insulator (P), and the abutment points (S) of two straight portions (G), situated in common between two teeth (Z) and dividing an intermediate space between the teeth (Z), of two adjoining coils (C) are arranged offset in relation to one another in the direction of the width (b).

## Revendications

1. Entraînement direct comprenant un stator (STA) muni de dents (Z), chaque dent (Z) comportant des flancs droits et étant équipée d'une bobine préfabriquée (C), chaque bobine (C) étant enroulée de manière orthocyclique à partir d'un fil (D) de section ronde et comportant deux portions droites (G) et deux têtes d'enroulement (K) qui relient les portions droites (G) l'une à l'autre, la distance entre les têtes d'enroulement (K) définissant une hauteur des portions droites (G), les portions droites (G) comportant une surface intérieure (Gi), qui pointent vers l'intérieur de la bobine (C) et qui est dirigée vers la dent respective (Z), et une surface extérieure (Ga), qui est opposée à la surface intérieure (Gi) et qui est dirigée à l'opposé de la dent respective (Z), ayant la hauteur des portions droites (G) et une largeur (b) des portions droites (G), la distance de la surface intérieure (Gi) à la surface extérieure (Ga) définissant une épaisseur (d) de la bobine (C), les portions droites (G) étant recouvertes chacune d'un isolant sensiblement bidimensionnel (P), et le fil (D) et l'isolateur sensiblement bidimensionnel (P) étant cuits ensemble avec application d'une pression et d'une température pour former une bobine autoportante (C), et l'isolateur sensiblement bidimensionnel (P) comportant une zone de couture (N) sur la surface extérieure (Ga), la surface intérieure (Gi) et la surface extérieure (Ga) d'une bobine (C) sur deux étant alignées parallèlement l'une à l'autre et parallèlement aux flancs de la dent respective (Z), une extension (u) de la zone de couture (N) dans le sens de la largeur (b) étant nulle de sorte qu'un joint (S) est formé par des bords de l'isolant sensiblement bidimensionnel (P) et les joints (S) de deux portions droites (G) de deux bobines adjacentes (C), lesquelles portions droites étant situées toutes les deux entre deux dents (Z) et se séparant pour former un espace entre les dents (Z), étant décalées l'une de l'autre dans le sens de la largeur (b).
